# EUROPÄISCHE PATENTANMELDUNG

(11) **EP 2 650 819 A1**
(43) Veröffentlichungstag der Anmeldung: **16.10.2013**
(21) Anmeldenummer: 12160421.9
(22) Anmeldetag: 20.03.2012
(51) Int. Cl.: G06F 21/86, G06F 21/72, G06F 21/78, G06F 21/85

(54) **Datenladevorrichtung**

(71) Anmelder: TechSAT GmbH, 85586 Poing (DE)
(72) Erfinder:
(74) Vertreter: Peter, Julian

(57) **Zusammenfassung**

Die Erfindung betrifft eine Datenladevorrichtung zum Laden von verschlüsselten Daten einer Datenquelle (2) in eine Computer-Einheit (LRU) (3), insbesondere in Land- Luft- und Wasserfahrtzeugen, wobei ein gesichertes und versiegeltes Gehäuse (10) mit einer Entschlüsselungseinheit (9) ausgestattet ist. Das Gehäuse ist mit mindestens einem Eingang (4; 4") für die verschlüsselten Daten, mindestens einem Ausgang (5; 5") zum Laden entschlüsselter Daten zur Computer-Einheit (3) und einem in einer Datenleitung (6) zwischen Ein- und Ausgang angeordneten Entschlüsselungs-Computer (eSLB) (7) mit einem Entschlüsselungsprogramm zum Entschlüsseln der von der Datenquelle (2) dem Eingang (4) gelieferten verschlüsselten Daten versehen, wobei die Daten nach dem Entschlüsseln in einem Datenspeicher (8) des Entschlüsselungs-Computer (eSLB) (7) gespeichert werden und anschließend in die Computereinheit (3) ladbar sind,

## Beschreibung

Die Erfindung betrifft eine Datenladevorrichtung zum Laden von verschlüsselten Daten einer Datenquelle in eine Computer-Einheit (LRU), insbesondere in Land-, Luft- oder Wasserfahrzeugen.

### Hintergrund der Erfindung

Moderne Transportmittel, insbesondere Flugzeuge, aber auch Kraftfahrzeuge und Schiffe sind heute mit elektronischen Anzeige-, Navigations-, Steuerungs- und allgemeinen Kontrollinstrumenten und Geräten ausgerüstet, die als leistungsfähige Computer ausgebildet sind. Die vorliegende Erfindung findet vornehmlich ihren Einsatz in der Avionik, sie ist jedoch in gleicherweise bei den anderen genannten Verkehrsmitteln einsetzbar.

Die Avionik, z. B. Flugkontroll- und Managementsysteme, e.g. Autopilot, das Flight Management System (FMS) und die Elektronik für Fly-by-Wire- Flugsteuerungssysteme (FBW) sowie Flugüberwachungsgeräte, wie z. B. Kollisionswarnsysteme (TCAS), die Überwachung der Flugzeugsysteme, wie z. B. die Triebwerke, die Kommunikation, im Flugzeug sowie in die Flugfunksysteme für Sprache und Text (Future Air Navigation System (FANS)) und auch sowie viele Anzeigegeräte und das Radar bedürfen eines regelmäßigen und in manchen Fällen eines zusätzlichen Updates ihrer Software und ihrer Daten. Ein solches Update wird in aller Regel von zugelassenen Wartungsbetrieben, Werkstätten oder im Falle von Luftfahrzeugen durch die Fluggesellschaft ausgeführt.

Für den Ladevorgang werden Ladegeräte (Data Loader) eingesetzt, die entweder im Cockpit eines Flugzeugs fest eingebaut oder als tragbares Gerät (Portable Data Loader) ausgeführt sind. In der Luftfahrt findet der Datentransfer zwischen dem Ladegerät und dem jeweiligen Avionik-Geräten über international standardisierte Schnittstellen und Protokolle statt, z. B ist ARINC 664 ein auf Ethernet basierender Standard zur Vernetzung von Avionik-Komponenten in einem Flugzeug. Weitere Standards sind ARINC 429 (Datenbus für Verkehrsflugzeuge), ARINC 825 (Airbus A380, A350), oder ARINC 629 (Datenbus in der Boeing 777)

Im üblichen Stand der Technik werden diese Daten unverschlüsselt bereitgestellt, so dass die Gefahr von Manipulation nicht ausgeschlossen werden kann. Zwischenzeitlich besteht jedoch die Forderung an die den Flugzeugbaufirmen und der Luftfahrt allgemein und an die entsprechenden Ausrüster, die zu ladenenden Software-Updates abzusichern. Es sind daher sogenannte "Security Requirements" definiert worden. Im Kern eines solchen abgesicherten Ladeverfahrens stand die Forderung nach der Verwendung von sogenannten "digitalen Signaturen"(Digital Signature), die nur von den Herstellern der Avionik-Geräte für ihre jeweiligen Geräte vergeben werden können. Diese "digitalen Signaturen" haben eine vergleichbare Eigenschaft wie ein Protokoll der zu ladenden Software-Updates, sie verlangen jedoch den Einsatz einer Entschlüsselungssoftware.

Damit der Ladevorgang durchgeführt werden kann ist bereits beim Einlesen von Daten, die mit einer digitalen Signatur versehen sind, ist ein Entschlüsselungsprogramm erforderlich. Daten, die von einem Speichermedium auf ein Avionik-Gerät, zum Beispiel einer LRU (Line Replacement Unit) geladen werden sollen, könnten zum Beispiel in einem Notebook mit entsprechender Software entschlüsselt werden und über eine oben bezeichnete international genormte Schnittstelle auf die LRU geladen werden. Hierdurch ergibt sich jedoch ebenfalls die Gefahr, unmittelbar mit dem Notebook die Daten zu manipulieren, so dass die ursprünglichen Daten um mittels des Notebooks hinzugefügte manipulierte Daten ergänzt und eingespeist würden.

### Aufgabe der Erfindung

Aufgabe der Erfindung ist es daher, einen Datenlader zu schaffen, bei dem sichergestellt wird, dass die ursprünglich mit einer digitalen Signatur versehenen Daten nicht vor oder beim Laden in ein Avionik-Gerät manipuliert werden können.

### Lösung der Aufgabe

Die Aufgabe wird erfindungsgemäß mit einer Datenladevorrichtung zum Laden von verschlüsselten Daten von einer Datenquelle in eine Computereinheit in Luft-, Land-, oder Wasserfahrzeug dadurch gelöst, dass eine in einem gesicherten und versiegelten Gehäuse angeordneten Entschlüsselungseinheit bereitgestellt wird, die mit mindestens einem Eingang für die verschlüsselten Daten, einem Ausgang zum Laden entschlüsselter Daten zur Computereinheit, einem in einer Datenleitung zwischen Ein- und Ausgang angeordneten Entschlüsselungs-Computer mit einem Entschlüsselungsprogramm zum Entschlüsseln der von der Datenquelle dem Eingang gelieferten verschlüsselten Daten versehen ist, wobei die Daten nach dem Entschlüsseln in einem Datenspeicher des Entschlüsselungs-Computers gespeichert werden und anschließend in die Computereinheit ladbar sind.

Der Einsatz eines solchen gesicherten Gehäuses mit darin angeordneten Entschlüsselungs-Computer ermöglicht es, die von den Herstellern gelieferten, mit digitalen Signaturen abgesicherten Software-Updates auf die jeweiligen Avionik-Computer zu laden und zu verarbeiten. Ein solcher abgesicherter Transfer von Daten auf entsprechende Computer eines Flugzeugs oder eines anderen Fahrzeugs ist nur durch den Einsatz einer oben beschriebenen gesicherten und versiegelbaren Box möglich, weil das entsprechende Entschlüsselungsprogramm nur von Berechtigten auf einen Entschlüsselungscomputer installiert werden kann.

Vom besonderen Vorteil ist es, dass der Entschlüsselungs-Computer gemeinsam mit einem Bus in dem Gehäuse ist, wobei der Bus mit dem Ausgang verbunden ist. Durch die gemeinsame Anordnung des Entschlüsselungs-Computers und des Bus-Interface in einem gemeinsamen Gehäuse ist eine kompakte Bauweise möglich. Von Vorteil ist, dass die Leitung zwischen der Datenladevorrichtung und der Computereinheit eine gesicherte bi-direktionale Leitung ist. Hierdurch wird sichergestellt, dass in dem Avionik-Gerät vorgesehene Steuerbefehl von dem Lader erkannt werden können und so ein reibungsloser Ladevorrang sichergestellt ist.

Günstig ist es, wenn der Entschlüsselungscomputer ein Single-Board-Computer mit Linux-Betriebssystem ist und einen Datenkonverter aufweist.

Vom besonderen Vorteil ist es, dass die Datenladevorrichtung eine mobile Vorrichtung ist und das Gehäuse mit dem Entschlüsselungs-Computer in einem gesicherten und versiegelten Raum in einem tragbaren Behältnis angeordnet ist.

Dabei ist es günstig, dass das tragbare Behältnis einen verschließbaren Koffer mit einer Verschluss-Zwischenplatte ist, über die der versiegelte Raum in den Koffer zugänglich ist. Hierbei kann bei einer besonderen Ausführungsform die Befestigung der Verschluss-Zwischenplatte in den Koffer mit einer optischen und/oder elektronischen Versiegelung versehen sein. Dies ermöglicht eine Prüfung der Ladevorrichtung daraufhin, ob eine Manipulation an den Lader vorgenommen worden ist.

Besonders günstig ist es, wenn die Versiegelung mit einem Unterbrecherschalter in den Entschlüsselungs-Computer gekoppelt ist und ein Bruch der Versiegelung den Entschlüsselungs-Computer außer Funktion setzt. Auf diese Weise ist sichergestellt, dass keine unerwünschten Daten in den Avionik-Computer eingespeist werden. Eine weitere Vorsichtsmaßnahme kann darin bestehen, dass ein Interface unter der Verschlussplatte eingebaut ist.

Die Datenquelle, von der der Entschlüsselungs-Computer die verschlüsselten Daten bezieht, kann der Datenspeicher eines Notebooks oder eines vergleichbaren Computers sein, mit dem dann auch der Ladevorgang gesteuert werden kann.

Vorteilhafterweise ist das tragbare Behältnis ein verschließbarer Koffer mit einer Verschluss-Zwischenplatte über die der Raum mit dem Entschlüsselungs-Computer zugänglich ist. Bei einer solchen Konstruktion ist es vorteilhaft, wenn die Befestigung der Verschluss-Zwischenplatte in den Koffer mit einer optischen und/oder elektronischen Versiegelung versehen ist. Hierdurch kann von außen oder an dem Notebook unmittelbar erkannt werden, ob eine unbefugte Manipulation an dem Koffer stattgefunden hat.

Vorteilhaft ist dabei, wenn die Versiegelung mit einem Unterbrecherschalter in den Entschlüsselungs-Computer gekoppelt ist und ein Bruch der Versiegelung den Entschlüsselungs-Computer außer Funktion setzt.

Vorteilhaft ist, wenn das Notebook oder eine vergleichbare Computereinheit mit Eingabetastatur oder einem sonstigen Human-Machine-Interface auf der Verschluss-Zwischenplatte angeordnet ist. Hierbei kann das Notebook auf der Verschluss-Zwischenplatte verschraubt sein.

Ein bequemes Arbeiten ist dann ermöglicht, wenn an dem Koffer ein Außen-Dateneingang angeordnet ist, über den verschlüsselte Daten in das Notebook ladbar sind. Das Notebook stellt dann die Datenquelle dar, von der der Entschlüsselungs-Computer die verschlüsselten Daten bezieht.

Bei einer günstigen Ausführungsform kann vorgesehen sein, dass die Verschluss-Zwischenplatte abgewinkelt ist und eine senkrechte Wand aufweist, die in dem Koffer einen freien offenen Raum neben dem gesicherten Raum abtrennt. Vorteilhaft ist dabei, wenn der Ausgang in der senkrechten Wand angeordnet ist, so daß der Zugang nur bei geöffnetem Koffer möglich ist.

Im Folgenden wird ein Ausführungsbeispiel der Erfindung in Verbindung mit den Figuren näher erläutert. Es zeigen
Fig. 1 eine Entschlüsselungseinheit in
   a) schematischer Darstellung von der Vorderseite,
   b) schematischer Darstellung von der Rückseite,
   c) schematischer Darstellung eines Schnitts, und
   d) schematischer Darstellung von oben;
Fig. 2 eine Datenladevorrichtung in
   a) einem Behältnis nach Art eines Aktenkoffers mit aufgeklapptem Deckel und darin angeordneten Notebook und Ladekabeln,
   b) eine Seitenansicht des unteren Teils des Koffers von links;
Fig. 3 eine schematische Darstellung einer Datenladevorrichtung von der Seite mit aufgeklapptem Kofferdeckel und aufgeklapptem Notebook, entsprechend eines Schnitts B-B in Fig.2;
Fig. 4 eine Ansicht eines Schnitts A-A aus Fig.2 mit schematischer Darstellung des Einbaus der Entschlüsselungseinheit unter einer Verschluss-Zwischenplatte;
Fig. 5 eine schematische Systemdarstellung der Datenladevorrichtung, und
Fig. 6 ein Blockdiagramm der Datenladevorrichtung.

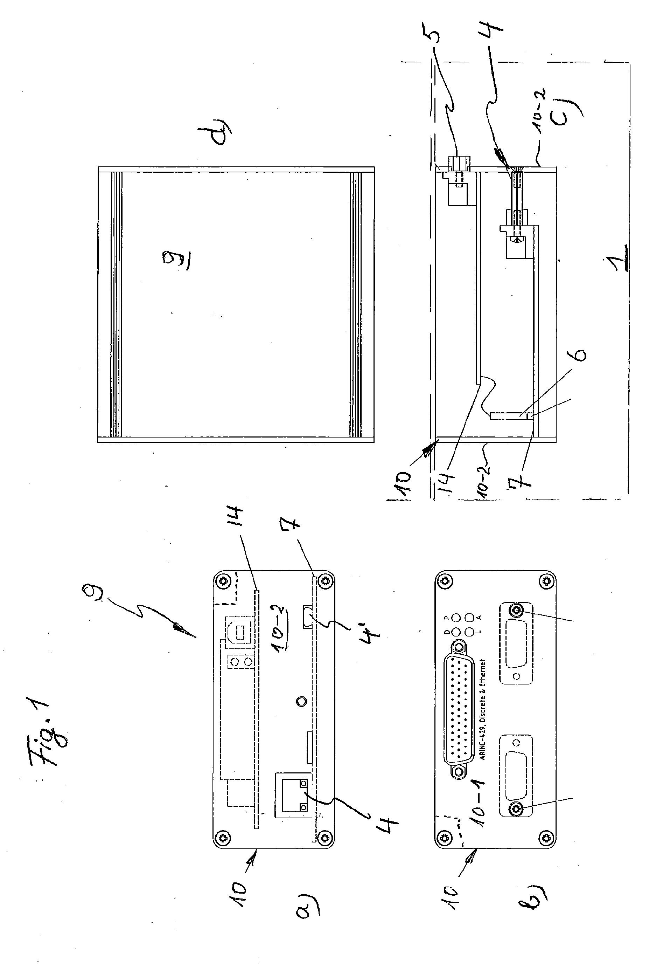

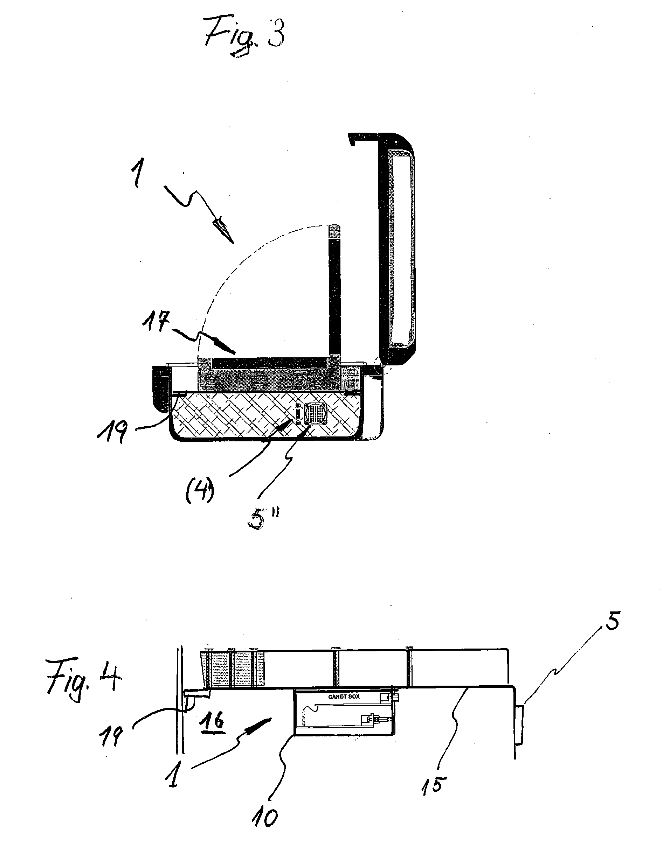

Die nachfolgende, in Verbindung mit den Figuren 1 - 6 dargelegte Beschreibung eines Ausführungsbeispiels einer Datenladevorrichtung beschränkt sich lediglich auf die wesentlichen Merkmale der Erfindung.

In den Figuren 1 a) bis 1 d) ist eine Entschlüsselungseinheit 9 einer Datenladevorrichtung 1 in verschiedenen Ansichten dargestellt. Die Datenladevorrichtung 1 ist in Fig. 1 a) bis d) nur skizzenhaft dargestellt. Ihrer Bauart nach ist die Datenladevorrichtung sowohl mobil als auch fest im Cockpit einsetzbar.

Die Entschlüsselungseinheit 9 weist ein gesichertes und versiegeltes Gehäuse 10 auf, das mit einem Eingang 4 für die verschlüsselten Daten und mit einem Ausgang 5 zum Laden entschlüsselter Daten zu einer Computer-Einheit 3 versehen ist. Sie ist in einer Datenleitung 6 zwischen Ein- und Ausgängen 4 bzw. 5 angeordnet. Die Entschlüsselungseinheit 9 ist als ein Entschlüsselungs-Computer 7 mit einem Entschlüsselungsprogramm zum Entschlüsseln der von der Datenquelle dem Eingang 4 gelieferten verschlüsselten Daten versehen.

Das gesicherte und versiegelte Gehäuse 10 besteht in der Regel aus einem Vierkantenhohlprofil mit entsprechender Bemessung, dessen offene Seiten von Seitenwänden 10-1 und 10-2 verschlossen sind. An diesen Seitenwänden 10-1 und 10-2 sind der Entschlüsselungs-Computer 7 und ein Bus-Interface 14 gehalten. An der Seitenwand 10-2 ist der Eingang 4 mit dem Entschlüsselungs-Computer 7 und der Ausgang 5 mit dem Bus-Interface 14 verbunden. Die Sicherung besteht darin, dass die Seitenwände 10-1 und 10-2 an dem Hohlprofil mit Sicherheitsschrauben, die nur durch ein besonderes Werkzeug zu öffnen sind, verschraubt sind. Die Versiegelung kann, beispielshaft, durch ein nur einem Berechtigten zur Verfügung stehendes Klebsiegel bereitgestellt werden, dass auf mindestens zwei der Schrauben auf jeder Seitenwand 10-1 und 10-2 aufgeklebt ist.

Die Versiegelung ist in den Figuren 1 a und 1 b schematisch durch eine gestrichelte Linie in den Ecken des Gehäuses dargestellt. Die Daten können am Eingang 4 zum einen über eine Ethernet-Leitung, zum andern jedoch auch über einen USB-Stecker 4' auf den Entschlüsselungs-Computer geladen werden. Der USB-Stecker 4' ist in Fig. 1 a im Abstand von den Eingang für den Ethernet-Anschluss dargestellt.

Im mobilen Einsatz kann die Entschlüsselungseinheit 9 als separates Gerät gemeinsam mit einem Notebook 17 betrieben werden, wodurch auch ein HMI (Human-Machine-Interface) bereitgestellt wird.

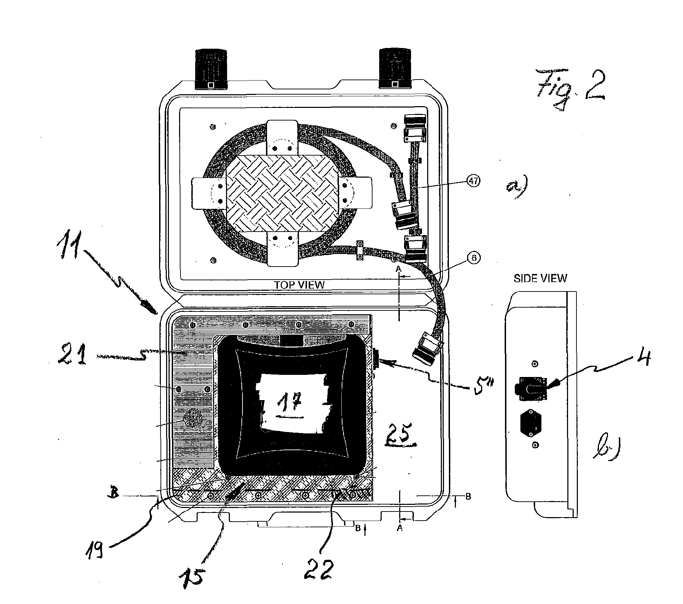

Wie in den Figuren 2 bis 4 dargestellt, ist die Entschlüsselungseinheit in einem gesicherten und versiegelten Raum 16 in einem kofferartigen tragbaren Behältnis 11 angeordnet. Der verschließbare Koffer weist eine Verschluss-Zwischenplatte 15 auf, über die der Raum 16, in dem sich die Entschlüsselungseinheit befindet, zugänglich ist.

Das Gehäuse 10 der Entschlüsselungseinheit 9 ist unter der Verschluss-Zwischenplatte 15 verschraubt und bildet mit der Verschluss-Zwischenplatte 15 eine Montageeinheit. Bei bestimmten Anwendungsfällen kann die Befestigung der Verschluss-Zwischenplatte 15 in dem Koffer mit einer optischen und/oder elektronischen Versiegelung 22 versehen sein. Im Falle einer elektronischen Versiegelung 22 schaltet ein Bruch der Versiegelung einen Unterbrecherschalter 23, der mit dem Entschlüsselungs-Computer 7 gekoppelt ist, so dass ein Bruch der Versiegelung den Entschlüsselungs-Computer 7 außer Funktion setzt. Hierdurch vermeidet man die Gefahr einer unmittelbaren Manipulation von Daten in der Entschlüsselungseinheit.

Der Kofferinnenraum ist in einen vorbestimmten Abstand über den Kofferboden mit einem Rahmen 19 ausgestattet, auf dem die Verschluss-Zwischenplatte 15 in geeigneter Weise verschraubt ist. Um einen abgeschlossenen Raum zu bilden, besitzt die Verschluss-Zwischenplatte 15 eine nach unten abgewinkelte senkrechte Wand 24. Bei eingesetzter Verschluss-Zwischenplatte 15 ist der Raum 16 nach dem Verschrauben der Platte von außen nicht mehr ohne weiteres zugänglich, d.h., ein unbefugtes Öffnen ist erkennbar, z.B. durch den Bruch eines Siegels.

Bei dem in Figuren 2 bis 5 dargestellten Ausführungsbeispiel ist ein Notebook 17 fest auf der Verschluss-Zwischenplatte 15 aufgeschraubt, wobei eine Abdeckung 21 die Verkabelung zwischen dem Notebook und der Entschlüsselungseinheit gegen Zugriff von außen sichert. Hierzu umschließt die Abdeckplatte 21 im Bereich der relevanten Ein- und Ausgänge des Notebooks dessen Seitenrand dergestalt, dass die Arbeitsoberfläche des Keyboards bei geöffnetem Notebook-Deckel im Wesentlichen bündig der Abdeckung 19 verläuft.

An der senkrechten Wand 24 ist ein Ausgang 5 mit einem Stecker-Anschluss für das Datenverbindungskabel zum Dateneingang im Cockpit des Flugzeugs ausgestattet. Bei dem Dateneingang im Cockpit kann es sich um den Eingang in die LRU oder um einen allgemeinen, für diese Zwecke vorgesehenen Eingang handeln.

In Fig. 2b ist eine Seitenansicht des Koffers wiedergegeben. Darin ist erkennbar, dass an der Außenwand des Koffers ein erster Eingang 4 für auf das Notebook zu ladende Dateien angeordnet ist. Desweiteren kann hier auch noch ein Stecker zur Stromversorgung der gesamten Ladevorrichtung vorgesehen sein.

Die senkrechte Wand 24 begrenzt im Koffer 11 einen offenen Raum 23, in dem ein Ausgang 5' zur Computereinheit (LRU) 3 ausgebildet ist. Neben diesem Ausgang 5" ist ein USB-Slot für einen Eingang 4' ausgebildet, der es ermöglicht, auf einem USB-Stick geladene Daten auf die in einem solchen Koffer eingebaute Entschlüsselungseinheit zu laden.

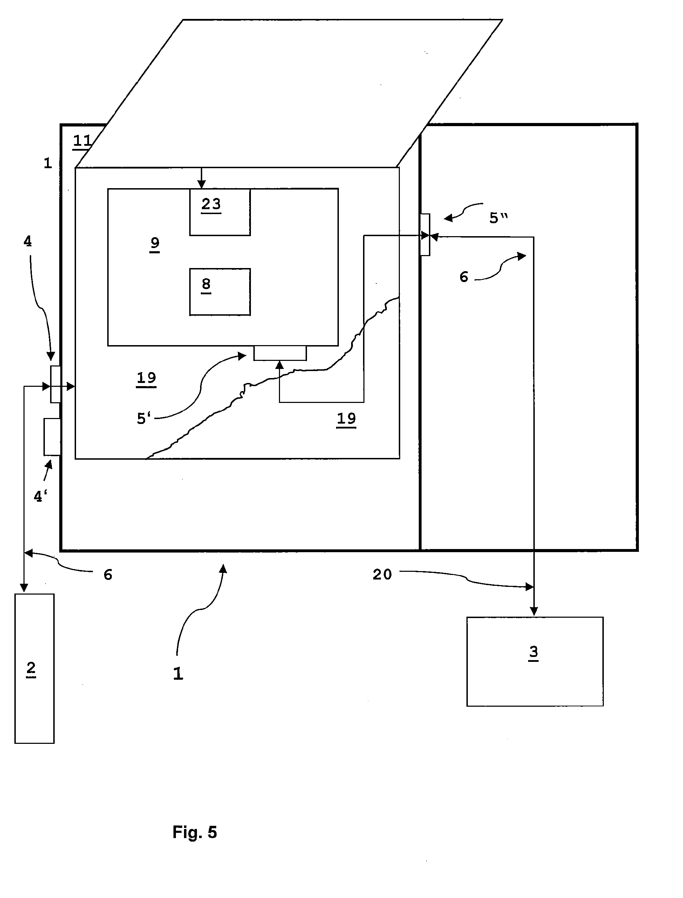

Fig. 5 zeigt eine schematische Darstellung der einzelnen Bauteile einschließlich des Datenflusses. Eine mobile Datenladevorrichtung wird üblicherweise in einen "Shop" an eine Datenquelle 2 angeschlossen, von der verschlüsselte, mit einer digitalen Signatur versehene Daten über eine Ethernet-Leitung, hier als Datenleitung 6 bezeichnet, in die Datenladevorrichtung über den Eingang 4 heruntergeladen werden. Der Ladevorgang kann jedoch auch über einen USB-Stick erfolgen, der in einen Slot 4' eingesteckt wird. Die Vorrichtung kann so ausgelegt sein, dass die Daten entweder in dem Entschlüsselungscomputer oder in dem sich im Koffer 11 befindenden Notebook 17 gespeichert. Sodann kann die Datenladevorrichtung (Portable Data Loader) von einem Monteur in das Cockpit oder in ein anderes Kontroll-/Steuerzentrum getragen und eine Verbindungsleitung 6 an den Ausgang 5" im freien Raum 25 des Koffers angeschlossen werden. Das andere Ende der Lade-Leitung wird mit einem entsprechenden Socket im Cockpit oder einer sonstigen Computereinheit angeschlossen. Über einen entsprechenden Steuerbefehl, der über die Tastatur des Notebooks eingegeben wird, wird das Startsignal zum Transport der verschlüsselten Daten zur Entschlüsselungseinheit 9 gegeben oder, für den Fall, dass die Daten auf den Entschlüsselungscomputer geladen waren, zum Entschlüsseln. Die Entschlüsselungseinheit 9 entschlüsselt die Daten und speichert sie auf einen Zwischenspeicher 8 der Entschlüsselungseinheit ab. Von dort werden die unverschlüsselten Daten über den Ausgang 5' und der internen Leitung 6 dem Ausgang 5" und von dort über die Datenleitung 6 der Computereinheit, im Fall eines Flugzeugs einer LRU eingespeichert.

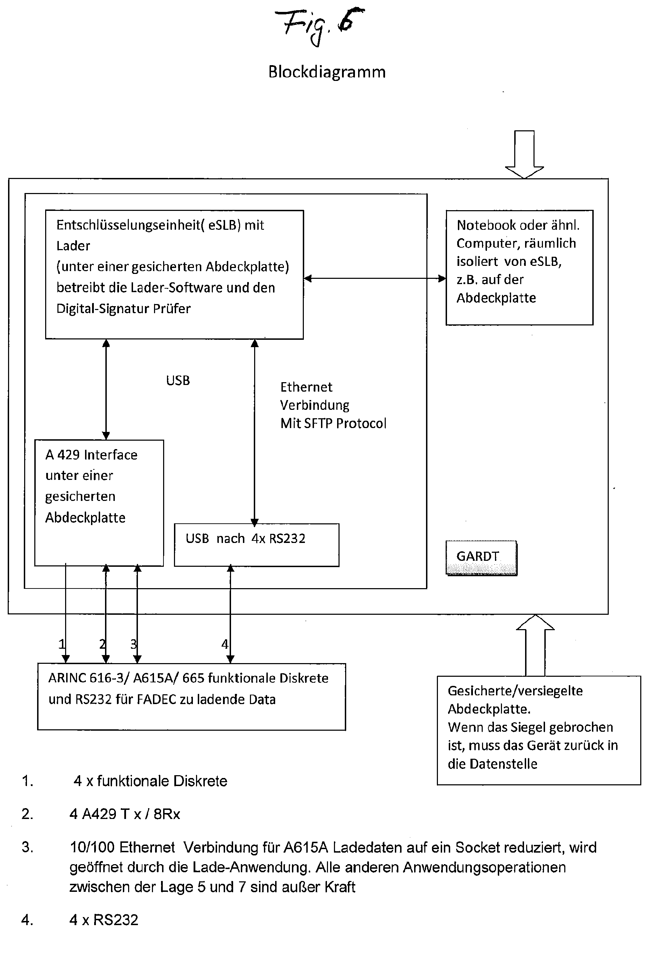

Fig. 6 zeigt ein Blockdiagramm des Systems angewandt auf einen Ladevorgang bei einem Verkehrsflugzeug. Die Entschlüsselungseinheit (eSLB) ist über eine USB-Verbindung mit einem A429 Interface verbunden. Sowohl die Entschlüsselungseinheit eSLB als auch das A429 Interface befinden sich unter der gesicherten Abdeckplatte. Die Datenverbindung von der Entschlüsselungseinheit eSLB zu einem Notebook erfolgt über eine Ethernet-Verbindung, wobei von dem SFTP-Protokoll Gebrauch gemacht wird. Der Ausgang aus der Entschlüsselungseinheit führt über eine bi-direktionale Leitung in das Cockpit und bedient hierbei eine ARINC 615-3/ A615A/ 665 und weitere funktionale Diskrete, wobei die zu ladenden Daten für FADEC über mindestens eine RS232 zu laden sind. Die Ethernet-Verbindung für A615A Ladedaten ist auf ein Socket reduziert und wird durch die Lade-Anwendung geöffnet.

Es wurde eine Entschlüsselungseinheit beschrieben, wie sie im mobilen Einsatz verwendet wird. Es versteht sich, dass mit entsprechenden Modifikationen eine solche Einheit auch im Flugzeug, z. B. als eine LRU, eingebaut sein kann.

| Bezugszeichenliste Datenladevorrichtung | |
|---|---|
| (1) | Datenladevorrichtung |
| (2) | Datenquelle |
| (3) | Computer-Einheit (LRU), |
| (4) | Eingang für die zu ladenden verschlüsselten Daten |
| (5) | Ausgang zur Computer-Einheit, |
| (6) | Datenleitung zwischen Ein- und Ausgang |
| (7) | Entschlüsselungs-Computer |
| (8) | Speicher |
| (9) | Entschlüsselungseinheit (eSLB) |
| (10) | Gehäuse, gesicherten/versiegelten |
| (11) | tragbaren Behältnis -> Koffer |
| (12) | bi-direktionale Leitung |
| (13) | gesicherten Abdeckplatte |
| (14) | ARINC 429 Interface Bus, insbesondere ein USB AE Sybus ARINC 429 Interface, |
| (15) | Verschlussplatte im Koffer 11 |
| (16) | Eigener Raum |
| (17) | ein Notebook |
| (18) | Eingabetastatur oder HMI |
| (19) | Rahmen im Koffer |
| (20) | Verbindungsleitung |
| (21) | Eingang für eine erste Datenquelle |
| (22) | Versiegelung (22) |
| (23) | Unterbrecherschalter |
| (24) | Senkrechte Wand |
| (25) | Offener Raum |

## Patentansprüche

1. Datenladevorrichtung zum Laden von verschlüsselten Daten einer Datenquelle (2) in eine Computer-Einheit (LRU) (3), insbesondere in Land- Luft- und Wasserfahrtzeugen, **gekennzeichnet durch** eine in einem gesicherten und versiegelten Gehäuse (10) angeordneten Entschlüsselungseinheit (9), das mit
a. mindestens einem Eingang (4; 4") für die verschlüsselten Daten,
b. mindestens einem Ausgang (5; 5") zum Laden entschlüsselter Daten zur Computer-Einheit (3),
c. einem in einer Datenleitung (6) zwischen Ein- und Ausgang angeordneten Entschlüsselungs-Computer (eSLB) (7) mit einem Entschlüsselungsprogramm zum Entschlüsseln der von der Datenquelle (2) dem Eingang (4) gelieferten verschlüsselten Daten, versehen ist, wobei
d. die Daten nach dem Entschlüsseln in einem Datenspeicher (8) des Entschlüsselungs-Computer (eSLB) (7) gespeichert werden und anschließend in die Computereinheit (3) ladbar sind.

2. Datenladevorrichtung nach Anspruch 1, **dadurch gekennzeichnet, dass** der Entschlüsselungs-Computer (7) gemeinsam mit einem Bus Interface (14) in dem Gehäuse (10) angeordnet ist, wobei der Bus mit dem Ausgang (5) verbunden ist.

3. Datenladevorrichtung nach einem der vorangehenden Ansprüche, wobei der Entschlüsselungs-Computer (7) ein "Single Board Computer" mit Linux Betriebssystem ist und einen Daten-Konverter aufweist.

4. Datenladevorrichtung nach einem der vorangehenden Ansprüche, **dadurch gekennzeichnet, dass** die Vorrichtung eine mobile Vorrichtung ist und dass das Gehäuse (10) mit dem Entschlüsselungs-Computer (7) in einem gesicherten und versiegelten Raum (16) in einem tragbaren Behältnis (11) angeordnet sind.

5. Datenladevorrichtung nach einem der vorangehenden Ansprüche, **dadurch gekennzeichnet, daß** die Datenquelle (2) der Datenspeicher eines Notebook (17) oder eines vergleichbaren Computers ist, der den Ladevorgang steuert.

6. Datenladevorrichtung nach Anspruch 4, **dadurch gekennzeichnet, dass** das tragbare Behältnis (11) ein verschließbarer Koffer mit einer Verschluss-Zwischenplatte (15) ist, über die der Raum (16) in dem Koffer zugänglich ist.

7. Datenladevorrichtung nach Anspruch 6, **dadurch gekennzeichnet, dass** die Befestigung der Verschluss-Zwischenplatte (15) in dem Koffer mit einer optischen und/oder elektronischen Versiegelung (22) versehen ist.

8. Datenladevorrichtung nach Anspruch 6, **dadurch gekennzeichnet, dass** die Versiegelung (22) mit einem Unterbrecherschalter (23) in dem Entschlüsselungs-Computer (eSLB) (7) gekoppelt ist und ein Bruch der Versiegelung den Entschlüsselungs-Computer (eSLB) (7) außer Funktion setzt.

9. Datenladevorrichtung nach einem der vorangehenden Ansprüche 6 bis 8, wobei ein Interface unter der Verschluss-Zwischenplatte (15) eingebaut ist.

10. Datenladevorrichtung nach einem der vorangehenden Ansprüche, wobei das Notebook (17) oder eine vergleichbare Computereinheit mit Eingabetastatur (18) oder HMI auf der Verschluss-Zwischenplatte (15) angeordnet ist.

11. Datenladevorrichtung nach einem der vorangehenden Ansprüche 6 bis 10, wobei an dem Koffer (11) ein Außen -Dateneingang (21) angeordnet ist, über den verschlüsselte Daten in das Notebook (17) ladbar sind.

12. Datenladevorrichtung nach einem der vorangehenden Ansprüche 6 bis 11, **dadurch gekennzeichnet, dass** die Verschluss-Zwischenplatte (15) abgewinkelt ist und eine senkrechte Wand (24) aufweist, die in dem Koffer (11) einen freien offenen Raum (25) neben dem gesicherten Raum (16) abtrennt.

13. Datenladevorrichtung nach Anspruch 12, **dadurch gekennzeichnet, dass** der Ausgang (5") in der senkrechten Wand (24) angeordnet ist.

14. Datenladevorrichtung nach einem der vorangehenden Ansprüche 6 bis 11, **dadurch gekennzeichnet, dass** das Notebook (17) fest auf der Verschluss-Zwischenplatte (15) verschraubt ist.

15. Datenladevorrichtung nach einem der vorangehenden Ansprüche 6 bis 14, **dadurch gekennzeichnet, dass** die Verschluss-Zwischenplatte (15) auf einem Rahmen (19) im Koffer (11) verschraubt ist.
